Europäisches Patentamt

(19) European Patent Office

Office européen des brevets

(11) Publication number: **0 163 539**
**A2**

# (12) EUROPEAN PATENT APPLICATION

(21) Application number: **85303832.1**

(22) Date of filing: **30.05.85**

(51) Int. Cl.⁴: **G 02 B 6/38**

(30) Priority: **30.05.84 US 615256**

(43) Date of publication of application:
**04.12.85 Bulletin 85/49**

(84) Designated Contracting States:
**DE FR GB IT NL**

(71) Applicant: **Corning Glass Works**
**Houghton Park**
**Corning New York 14831(US)**

(72) Inventor: **Borrelli, Nicholas Francis**
**935 West Water Street**
**Elmira New York(US)**

(72) Inventor: **Morse, David Lathrop**
**River Road**
**Corning New York(US)**

(74) Representative: **Boon, Graham Anthony et al,**
**Elkington and Fife High Holborn House 52/54 High**
**Holborn**
**London, WC1V 6SH(GB)**

(54) **Optical fiber positioner.**

(57) A glass element (10) useful for accurately positioning one or a series of optical fibers for interconnection with other fibers or active optical transmitter or receiver elements, comprises an accurately positioned grooved surface relief pattern achieved by differential densification of a photo-sensitively opacifiable glass.

Fig. 2

EP 0 163 539 A2

Croydon Printing Company Ltd.

-1-

OPTICAL FIBER POSITIONER

The present invention relates generally to positioning or mounting devices useful for coupling optical fibers, and particularly to an inexpensive positioning or mounting device fabricated from glass which can be used to precisely align small diameter optical fibers, as in an optical fiber connector or coupler, for the efficient coupling of light energy into or out of such fibers.

A particularly important application for optical fiber connectors or couplers is in the coupling of optical waveguide fibers used in telecommunications. In this application, it is important that light be coupled from one fiber to another fiber or device with very little loss of signal, i.e., with low insertion loss.

In the case where two optical fibers are to be joined end-to-end, insertion loss can result from center-to-center misalignment of the fiber cores, from angular misalignment of the axis of light transmission of the fibers, from fiber-to-fiber and separation, and from rough end surfaces. Coupling problems are particularly severe with single mode fibers, wherein core diameters are typically less than 10 microns and wherein numerical apertures are generally quite small. In fibers of this type, coupling losses on the order of 1 db can result from core center-to-center misalignment as small as 1 micron, or from angular misalignment of core axes as small as 3 degrees.

In one type of optical waveguide connector, designed for interconnecting the ends of multifiber cables or the like, it has been proposed to use connectors with fiber alignment means comprising a one-dimensional array of parallel V-shaped grooves in which the fiber ends are disposed. The grooves serve as channels to hold the fiber ends in accurate angular alignment and core-to-core registry for minimum insertion loss.

U.S. Patent No. 4,088,386 describes an optical waveguide connector of the V-groove type wherein the grooves can be formed by the cylindrical surfaces of rods formed of a resilient material. U.S. Patent No. 4,102,561 illustrates a connector of similar type wherein the grooves are formed by an integral array of rounded, parallel ridges. As pointed out in the latter patent, the grooves in such connectors need not be of precise V-shaped configuration; other configurations including U-shaped grooves or the like are suitable provided only that a channel for accurately positioning a fiber end with respect to a second fiber end, or with respect to another device for light input to or output from the fiber, is formed. Suitable techniques for forming the grooves include machining methods and plastic molding of the grooved surface element.

The present invention provides an optical fiber positioner of the grooved surface type wherein the grooved surface is formed in a glass. The surface relief pattern forming the desired groove or grooves is developed by heat treatment of the glass, rather than by a machining or molding process. The heat treatment has the effect of selectively densifying the glass, so that a desired grooved surface relief pattern is formed. Very precise control over groove dimensions and placement can be attained.

Broadly defined, the invention includes an optical fiber positioner of the grooved surface type, i.e., comprising a grooved surface fiber support member, wherein the grooved surface support member includes or consists of a glass element having a surface relief pattern resulting from the differential densification of the glass. By differential densification of a glass element is meant densification of different regions of the element to achieve different degrees of density in those regions.

Typically, differential densification in a glass occurs as the result of a thermally induced crystallization of only selected regions of the glass element, the crystals formed being of a higher density than the glass in which they are formed. This crystallization therefore results in compaction or shrinkage of the glass in the crystallized regions.

A convenient approach to the attainment of a differentially densified glass element with a grooved surface relief pattern is through the use of a photonucleable thermally opacifiable glass. Such a glass can be selectively crystallized in any arbitrary pattern by a two-step process. First, the glass is exposed to a patterned source of actinic (short wavelength visible or ultraviolet) light, to selectively develop nucleation sites for crystal growth in the exposed portions of the glass. Hereafter, the exposed glass is subjected to a heat treatment which is effective to initiate and develop crystal phases in the glass in those regions previously exposed to actinic light. Photonucleable thermally opacifiable glasses are known, being described in U.S. Patent No. 2,628,160, and the use of such glasses to form a surface relief lens array is described in EP-A-0133788 filed 30th July, 1984 claiming a priority date of 4th August 1983 and published 6th March, 1985.

Optical fiber positioners provided in accordance with the present invention can be used to advantage in a variety of optical fiber positioning end coupling applications. Where the positioner is to be used in a fiber-to-fiber coupler, and particularly when many fiber ends are to be interconnected, the coupler can include the positioner and a retaining second member, formed of a hard or resilient material, which can be placed over the fibers in the positioner to maintain the fiber ends in position in the grooves by physical contact. In this or any other application, a coating of a resilient material can also be applied to the grooved surface of the positioner, to provide a softer surface for fiber contact.

Where the positioner is to be used to position a fiber end for coupling with a light source such as a laser, or with a light detector, the fiber can simply be maintained in position on the grooved surface by means of an adhesive or cement. The grooves in the positioner can be dimensioned to accept coated or uncoated optical fiber, but for most accurate positioning the grooves will be proportioned to accept uncoated fiber.

The invention may be further understood by reference to the appended drawings wherein:

Fig. 1 is a schematic perspective end view, not in true proportion, of a glass element for an optical fiber positioner provided according to the invention; and

Fig. 2 schematically illustrates the steps of exposure, nucleation, and crystallization which can be used to provide a grooved surface relief pattern in a glass element for an optical fiber positioner according to the invention.

As is well known, essentially all inorganic glasses can be devitrified (crystallized) by appropriate thermal treatment. Further, the crystal phases formed in inorganic glasses are generally of higher density than the glasses from which they are formed, such that a volume reduction or shrinkage occurs when the glass is crystallized.

Crystallization of a glass in a controlled manner, such that the crystals formed are of relatively uniform size and composition, requires that a nucleation step be carried out. In this step, submicroscopic nuclei on which the desired crystal phase will subsequently be grown are precipitated in the glass by an appropriate treatment. When the glass is then later heated to crystallization temperatures, crystal growth preferentially occurs on the nuclei, so that crystal formation occurs rapidly in nucleated regions of the glass, and slowly or not at all in regions of the glass wherein no crystal nuclei have been formed.

U.S. Patents Nos. 2,515,940, 2,515,941, 2,515,943 and 2,628,160 disclose glasses wherein nucleation and crystallization of only selected regions of the glass can be induced by an exposure of these regions to actinic radiation, followed by heat treatment of the glass. Those regions of the glass not exposed to the actinic radiation do not generate crystal nuclei and remain essentially crystal-free through the nucleation and crystallization heat treatment.

As already noted, in glasses such as described in the above patents the crystallized regions are of higher density than uncrystallized regions. Therefore shrinkage of the glass occurs in crystallized regions, while the nonexposed, uncrystallized regions of the glass remain unchanged in volume and density. To produce a grooved surface pattern in such a glass, therefore, those regions of the glass where surface depressions or grooves are desired are exposed to actinic radiation, e.g., through a suitable photomask, and then the entire glass body is heated to cause nucleation, crystallization, and the formation of a surface relief pattern wherein surface depressions or grooves are developed in the previously exposed areas.

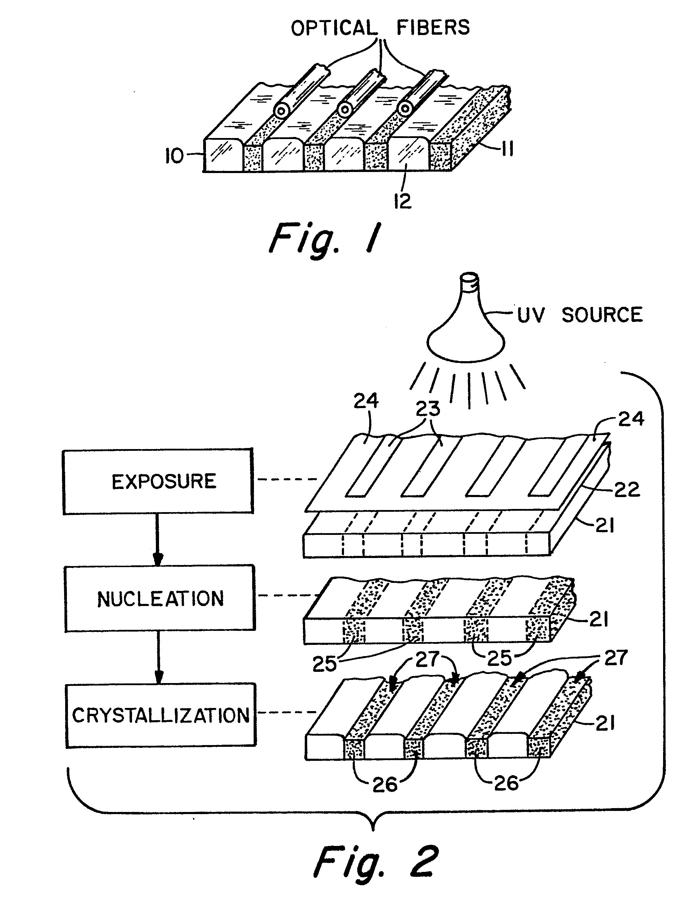

Fig. 1 of the drawing shows a partially crystallized glass element 10 produced from such a glass, in a form useful for providing a grooved surface support element for positioning an array of optical fibers. Crystallized regions 11 of the support element have been densified to form depressed grooves in the relatively elevated surface of the element overlying uncrystallized regions 12.

Fig. 2 of the drawing illustrates a process by which an element such as shown in Fig. 1 could be made. A photosensitive glass sheet 20 is selectively exposed in a line array pattern through photomask 22 from a source of collimated ultraviolet light, not shown. The photomask comprises transparent rectangular apertures 23 in opaque background 24. Following this exposure step, the glass is processed through a nucleation step, typically involving heating the exposed glass to a temperature at which nuclei 25 for crystal growth are precipitated in the glass. Finally, the glass is subjected to a crystallization step during which it is heated to a temperature at which crystals 26 grow in the regions of the glass formerly containing nuclei 25. The processes of crystal growth and densification generate a surface relief pattern characterized by the appearance of surface grooves 27.

It is theoretically possible to develop glass systems wherein the crystal phases which form are of a lower density than the parent glass, such that expansion of the glass occurs upon crystallization. In that case the grooved surface relief pattern which would be developed in the glass would be one wherein the grooves would overlay uncrystallized regions of the glass, with groove boundaries being formed by crystallized glass.

Among the known photosensitive glasses which are selectively opacifiable to provide grooved surface relief patterns according to the invention are certain silicate glasses in which lithium monosilicate or disilicate, barium disilicate, and/or alkali metal fluoride crystal phases can be developed by heat treatment. These glasses contain, in addition to alkali metal fluorides, $Li_2O$, and/or $BaO$ one or more photosensitizing agents selected from the group Au, Ag, Cu and Ce which play a critical role in the photonucleation process. U.S. Patent No. 2,628,160, expressly incorporated herein by reference, may be consulted for a further description of various photosensitively opacifiable glasses which could be used.

The invention may be further understood by reference to the following detailed example illustrating a way in which an optical fiber positioner could be provided in accordance with the invention.

#### Example

A sheet of photosensitively opacifiable glass 1.5 mm in thickness, commercially available from Corning Glass Works, Corning, New York, 14831, as Code 8603 glass, is selected for treatment. This glass has approximately the following composition, in parts by weight:

| | |
|---|---|
| $SiO_2$ | 79.1 |
| $Li_2O$ | 9.4 |
| $Na_2O$ | 1.6 |
| $K_2O$ | 4.2 |
| $A_2O_3$ | 4.2 |
| ZnO | 1.0 |

| Sb$_2$O$_3$ | 0.4 |
| Au | 0.0012 |
| Ag | 0.115 |
| CeO$_2$ | 0.015 |
| SnO | 0.003 |

A strip of glass approximately 2 cm in width and 4 cm in length is cut from this sheet and the strip is ground and polished to provide a smooth plane top surface. The ground and polished strip is thoroughly cleaned to remove all loose or foreign material, and then covered with a photomask having ten transparent parallel rectangular apertures on an optically opaque field. The apertures are 2 cm in length and 100 microns in width, with an aperture center-to-center spacing of 250 microns. The photomask is positioned so that the apertures traverse the width of the top surface of the glass strip.

The masked glass strip thus provided is exposed to a 435 watt mercury arc lamp (Hanovia) for 100 seconds at a lamp-to-glass spacing of approximately 40 cm. Following this exposure, the mask is removed and the exposed strip is heated to develop crystal nuclei in the glass, and further heated to develop a lithium silicate crystal phase in the nucleated regions of the glass. The nucleation heat treatment is carried out at 540°C. for 1 hour and the crystallization heat treatment at 580°C for 1 hour.

At the conclusion of this heat treatment the glass strip is cooled to room temperature and examined. The top surface of the strip is found to exhibit a grooved surface relief pattern defining a series of ten parallel grooves, the grooves overlying and being in registry with a series of ten crystallized bands traversing the width and thickness strip of the locations exposed to the arc lamp. The surface grooves have an approximate depth of 15 microns.

To utilize this grooved surface glass plate as an element in an optical waveguide fiber connector, each of a series of ten optical fiber ends from a first optical fiber cable, each fiber end having an outer diameter of approimately 125 microns and a core diameter of approximately 62 microns, is positioned in one of the grooves in the surface of the partly crystallized glass element and fastened to the element with a thermosetting plastic adhesive. These fiber ends are positioned to occupy approximately one half of the length of the grooves, and to terminate at about the center of the strip width. The fiber ends are kept free of adhesive.

Following the positioning of the fiber ends from the first cable, ten fiber ends from a second optical waveguide fiber cable are positioned to butt against the first fiber ends in the grooves. The second fibers are of the same outer diameter and core diameter as the first fiber. After the second fiber ends have been positioned, additional thermoplastic adhesive is applied to retain the fibers in the grooves and to maintain the relative positioning of the fiber ends. A durable multiple-fiber cable connection is thus provided.

Of course, the foregoing example illustrates only one use for an optical fiber positioner in accordance with the invention. Other uses include a single-fiber or multiple-fiber positioner for an optical fiber switch, a fiber positioner for selecting among several fibers for interconnection with one or a series of semiconductor lasers or light detectors, and other similar applications. Obviously, such interconnection devices may include additional means for mounting the grooved-surface glass element and for accurately positioning the element for reproducible fiber coupling, such as are well known in the art.

It will also be apparent that the degree of differential densification in the glass element will depend upon the particular surface relief pattern and groove depth required, such that neither full crystallization of the regions to be relatively highly densified nor the complete absence of crystals from the regions to receive relatively little densification is required. All that is necessary is that the density differential obtained be sufficient to achieve the desired surface relief in the glass element to be provided.

CLAIMS:

1. Optical fiber positioner of the grooved surface type comprising a grooved fiber support member, wherein the position of an optical fiber is defined by a groove in the surface of the support member,

characterized in that:

the grooved fiber support member includes an at least partially crystallized glass element and the groove in the element is formed by a surface relief pattern resulting from the differential densification of the glass.

2. Optical fiber positioner according to claim 1, characterized in that the support member comprises a grooved first member and a retaining second member, wherein the position of an optical fiber end section is defined by a groove in the surface of the first member and the fiber is maintained in position in the groove by contact with the retaining second member.

3. A positioner in accordance with claims 1 or 2 wherein, in the surface relief pattern, depressed regions of the pattern correspond to relatively highly crystallized regions in the glass.

4. A positioner in accordance with claims 1, 2 or 3, which includes a plurality of parallel grooves.

OPTICAL FIBERS

*Fig. 1*

UV SOURCE

EXPOSURE

NUCLEATION

CRYSTALLIZATION

*Fig. 2*